# EUROPÄISCHE PATENTSCHRIFT

(11) **EP 0 832 554 B1**
(45) Veröffentlichungstag und Bekanntmachung des Hinweises auf die Patenterteilung: **28.11.2001**
(21) Anmeldenummer: 97112209.8
(22) Anmeldetag: 17.07.1997
(51) Int. Cl.: A01F 12/40

(54) **Mähdrescher**
Combine
Moissonneuse-batteuse

(30) Priorität: 30.09.1996 DE 19640055
(43) Veröffentlichungstag der Anmeldung: 01.04.1998
(73) Patentinhaber: CLAAS KGaA, 33428 Harsewinkel (DE)
(72) Erfinder: Roberg, Alfons, 33428 Harsewinkel (DE)

(56) Entgegenhaltungen:
- EP-A- 0 124 628
- EP-A- 0 166 116
- DE-A- 4 431 802
- DE-A- 19 600 390
- DE-C- 429 746
- US-A- 2 053 148

## Beschreibung

Die Erfindung betrifft einen Mähdrescher mit einem Mähtisch und einem das Mähgut abtransportierenden Schrägförderer, dem ein Tangential- oder Axialdreschwerk nachgeschaltet ist, dem sich in Gutflußrichtung zwei nach dem Axialflußverfahren arbeitende, jeweils von einem Gehäuse umschlossene Trenneinrichtungen anschließend, wobei jede Trenneinrichtung im hinteren, dem Dreschwerk abgewandten Bereich mit einer Häckseleinrichtung ausgerüstet ist, deren in eine Betriebs- und Außerbetriebsstellung schwenkbare Häckselmesser im Abstand zueinander auf zu den Drehachsen der Trennrotoren der Trenneinrichtung achsparallele Tragachsen drehfest aufgesetzt sind.

Bei dem in Rede stehenden Mähdrescher schließt sich an den Schrägförderer eine nach dem Axial- oder Radialverfahren arbeitende Dreschtrommel und gegebenenfalls eine Übergabetrommel an. Die sich daran anschließenden Trennrotoren der Trenneinrichtung können je nach Bauart des Mähdreschers entweder parallel und im Abstand zu den Radachsen oder auch quer dazu stehen. Die Drehachsen der Trennrotoren stehen parallel und im Abstand zueinander. Sie verlaufen entweder horizontal oder schließen gegen die Horizontale einen kleinen spitzen Winkel ein, wobei die hinteren, der Dreschtrommel abgewandten Enden höher stehen als die vorderen Enden, d. h. in Dreschgutflußrichtung steigen die Trennrotoren an. Jeder Trennrotor ist von einem zweiteiligen Gehäuse umgeben, von denen das Oberteil eine Haube bildet und das Unterteil einen Abscheidekorb. In einem bestimmten Bereich im hinteren Teil jedes Trennrotors sind deren Förderelemente so ausgelegt, daß sie mit in einer Reihe angeordneten Häckselmessern zusammenwirken können, sofern diese in die Betriebsstellung geschwenkt sind. Dazu sind die Häckselmesser auf einer zu dem zugehörigen Trennrotor achsparallelen Tragachse drehfest aufgesetzt. Sofern das Stroh nicht gehäckselt werden soll, werden sie außerhalb des Durchlaufs der Förderelemente in einer Außerbetriebsstellung geschwenkt. Im Bereich der Häckseleinrichtung ist das Unterteil des Gehäuses als Mulde ausgebildet, die mit mehreren Durchtrittsschlitzen für die Häckselmesser versehen ist. Die Häckseleinrichtung ist mit einer Fremdkörpersicherung ausgerüstet, da nicht auszuschließen ist, daß nicht zu zerkleinernde Fremdkörper im Stroh enthalten sind. Die Häckselmesser werden deshalb durch Federn in die Betriebs- bzw. Arbeitsstellung gedrückt und können ausweichen, sofern sich ein Fremdkörper im Stroh befindet. Da die Häckseleinrichtung wahlweise eingesetzt wird und der Fahrer eines Mähdreschers ständig unter Zeitdruck arbeitet, wird angestrebt, daß die Bedienung sehr einfach ist und die Stillstandszeiten möglichst gering sind.

Der vorliegenden Erfindung liegt die Aufgabe zugrunde, einen Mähdrescher der eingangs näher beschriebenen Art in konstruktiv einfacher Weise so auszubilden, daß die Häckselmesser beider Trennrotoren durch Betätigung eines einzigen Stellgliedes in die Betriebs- bzw. Außerbetriebsstellung geschwenkt werden können.

Die gestellte Aufgabe wird gelöst, indem auf die beiden achsparallelen Tragachsen für die Häckselmesser jeweils mindestens ein Schwenkhebel drehfest aufgesetzt ist, deren den Tragachsen abgewandte Enden mittels eines Anschlußteiles beweglich miteinander verbunden sind, welches auf das freie Ende der Kolbenstange einer steuerbaren Kolbenzylindereinheit aufgesetzt ist.

Zum Schwenken der Häckselmesser beider Trennrotoren muß nunmehr nur eine Kolbenzylindereinheit angesteuert werden, da die beiden Schwenkhebel beweglich miteinander gekoppelt sind. Dabei wird eine konstruktiv einfache Lösung erreicht, indem die Kopplung bereits über das Anschlußteil erfolgt, welches auf die Kolbenstange der Kolbenzylindereinheit aufgesetzt ist. Anstelle einer Kolbenzylindereinheit könnte auch ein gleichwertiger Linearantrieb verwendet werden. Im Hinblick auf die sich ergebende Gesamtlänge der aneinander gereihten Häckselmesser ist es jedoch aus Stabilitätsgründen vorteilhaft, wenn auf beide Enden der Tragachsen jeweils ein Schwenkhebel drehfest aufgesetzt ist, deren Enden mittels einer abstandsgleich zu den Tragachsen stehenden Koppelstange verbunden sind, auf die im mittleren Bereich das Anschlußteil der Kolbenstange aufgesetzt ist. Durch diese Ausführung wird in einfachster Weise eine hochbelastbare Ausführung geschaffen. Die beiden Tragachsen für die Häckselmesser und die vier an den Enden darauf aufgesetzten Schwenkhebel bilden einen Rahmen wobei zwei parallel und im Abstand zueinander stehende Holme aus den beiden Schwenkhebeln gebildet sind, die in ihrer Lage verändert werden können. Dazu ist dann eine entsprechende Gestaltung des Verbindungsbereiches notwendig. In einfachster Weise ist das Anschlußteil ein Gabelkopf Außerdem ergibt sich ein konstruktiv einfache Lösung für die Beweglichkeit der miteinander gekoppelten Schwenkhebel, wenn diese an den Enden in Längsrichtung verlaufende Langlöcher aufweisen, in denen ein in der Gabelkopf eingesetzter Bolzen oder die Koppelstange gelagert ist, je nach dem ob auf jede Tragachse ein oder zwei Schwenkhebel aufgesetzt sind. Da ein Mähdrescher ohnehin mit einer Hydraulikanlage ausgerüstet ist, ist es vorteilhaft, wenn die Kolbenzylindereinheit ein doppelt wirkender Hydraulikzylinder ist, der von einem im Führerhaus des Mähdreschers installiertes Bedienungspult steuerbar ist.

In weiterer Ausgestaltung ist vorgesehen, daß die beiden auf jede Tragachse aufgesetzten Schwenkhebel mittels einer parallel und im Abstand zur Tragachse verlaufende Positionierstange zur Begrenzung der Betriebsstellung der Häckselmesser verbunden sind, und daß die Häckselmesser an der der Tragachse sowie den Drehachsen der Trennrotoren der Trenneinrichtung abgewandten Seiten in der Betriebsstellung an der Positionierstange anliegende Anschläge aufweisen. Dadurch wird verhindert, daß die Häckselmesser durch Berührung mit dem Mantel des Trennrotors beschädigt werden. Außerdem gewährleisten sie eine äußerst einfache Lagerung, indem jedes Häckselmesser am gegenüberliegenden Bereich eine winkelförmige Ausnehmung aufweist, die an der dem Trennrotor abgewandten Seite offen ist. In der normalen Stellung liegt dann die Tragachse in dem abgewinkelten Schenkel. Durch Zurückdrücken eines Häckselmessers entgegen der Drehrichtung des Trennrotors kann es dann durch den rechtwinklig zur Außenkante stehenden Schlitz von der Tragachse abgenommen werden.

Anhand der beiliegenden Zeichnungen wird die Erfindung noch näher erläutert. Es zeigen:
- Figur 1: einen erfindungsgemäßen Mähdrescher in einer Teilseitenansicht, rein schematisch und
- Figur 2: einen Schnitt längs der Linie II-II in der Figur 1 die im wesentlichen
die beiden Trenneinrichtungen mit den Trennrotoren und die Häckselmesser zeigen.

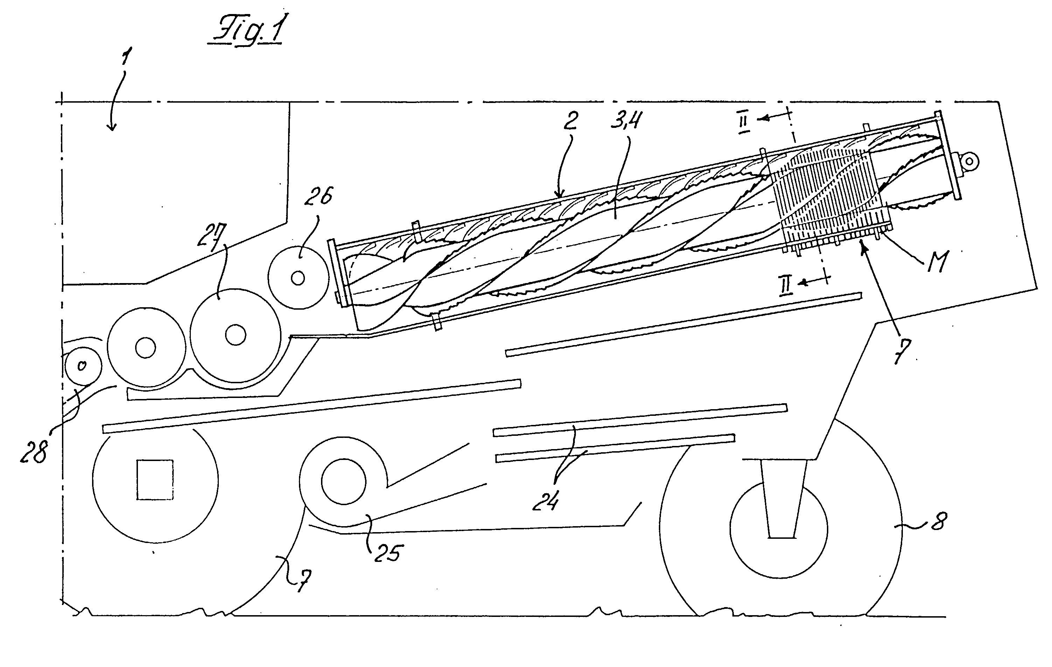

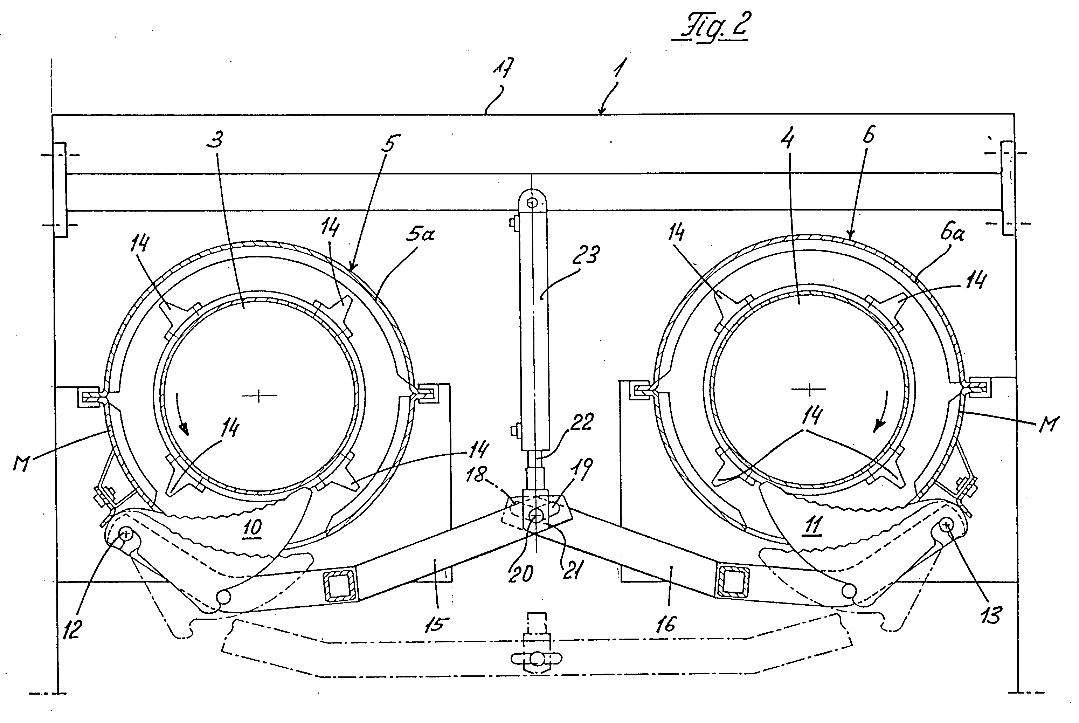

Der in der Figur 1 teilweise dargestellte Mähdrescher 1 ist mit zwei Trenneinrichtungen 2 ausgerüstet, die mit jeweils einem Trennrotor 3 und 4 ausgerüstet sind. Jeder Trennrotor 3, 4 ist von einem Gehäuse 5 und 6 umgeben, welches aus einer oberen Abdeckhaube 5a bzw. 6a und im Bereich einer Axialfluß-Häckseleinrichtung 7 aus einer Mulde M besteht. Die beiden Mulden M sind mit Häckselmesserdurchtrittsschlitzen versehen, die im Abstand zueinander und quer zu den Drehachsen der Trennrotore 3, 4 liegen. Die in einer Reihe angeordneten Häckselmesser 10, 11 beider Trennrotore 3, 4 sind auf durchgehenden Tragachsen 12, 13 gelagert, die parallel und im Abstand zu den Drehachsen der Trennrotoren 3, 4 verlaufen, und an den einander abgewandten Seiten der Drehachsen liegen. Die Betriebs- bzw. Arbeitsstellungen der Häckselmesser, 10, 11 sind in Vollinien dargestellt. Demnach ragen sie in die Umlaufbahnen von Schlagzähnen 14 hinein, die in einer spiralförmigen Formation auf die Trennrotore 3, 4 aufgesetzt sind. Der in der Figur 2 rechte Trennrotor 4 wird im Uhrzeigersinn und der in der Darstellung linke Trennrotor 3 entgegen dem Uhrzeigersinn angetrieben. In entgegengesetzter Richtung können die Häckselmesser 10, 11 in die in strichpunktierten Linien dargestellte Außerbetriebsstellung geschwenkt werden. Dazu sind im dargestellten Ausführungsbeispiel gemäß der Figur 2 auf die Enden der Tragachsen 12, 13 Schwenkhebel 15, 16 drehfest aufgesetzt. Die Schwenkhebel 15, 16 sind zweimal in Richtung zum Dach 17 des Mähdreschers 1 abgewinkelt. Die den Tragachsen 12, 13 abgewandten Enden überlappen sich und sind mit in Längsrichtung verlaufenden Langlöchern 18, 19 versehen. Die Schwenkhebel 15, 16 beider Enden sind durch eine Koppelstange 20 miteinander verbunden. Auf die Koppelstange 20 ist im mittleren Bereich ein Anschlußteil in Form eines Gabelkopfes 21 aufgesetzt, der von dem Ende der Kolbenstange 22 einer Kolbenzylindereinheit 23 getragen wird. Die Kolbenzylindereinheit 23 in Form eines Hydraulikzylinders ist ein doppelt wirkender Zylinder, der vom Bedienungspult des Mähdreschers angesteuert werden kann. Dieses Bedienungspult ist in der Fahrerkabine des Mähdreschers 1 installiert. Entgegen der Beschreibung kann auf jede Tragachse 12, 13 im mittleren Bereich nur ein Schwenkhebel 15, 16 aufgesetzt sein. Die Kopplung erfolgt dann mittels eines Bolzens und des Gabelkopfes 21.

Um die Häckselmesser 10, 11 in die in strichpunktierten Linien dargestellte Außerbetriebsstellung zu schwenken, muß der Fahrer des Mähdreschers 1 lediglich die Kolbenzylindereinheit 23 ansteuern. Die Schwenkhebel 15, 16 werden dann in die in strichpunktierten Linien dargestellte untere Endstellung verschwenkt. Das Schwenken in die Betriebsstellung erfolgt ebenfalls durch die Ansteuerung durch das Bedienungspult.

Die Figur 1 zeigt, daß die beiden Trennrotoren 3, 4 gegen die Horizontale geneigt sind und nach hinten, d. h. zum Auswurfende für das Häckselgut bzw. das Stroh ansteigen. Der Mähdrescher 1 ist außerdem mit den beiden Räderpaaren 7 und 8 ausgerüstet. Die von der Trenneinrichtung 2 ausgeschiedenen Körner fallen auf eine nicht näher erläuterte Siebeinrichtung 24. Die Reinigung wird durch ein Gebläse 25 unterstützt. In Dreschgutdurchlaufrichtung gesehen, liegt vor der Trenneinrichtung 2 eine Übergabetrommel 26 sowie eine Dreschtrommel 27. Von einem Schrägförderkanal 28 ist nur das auslaufseitige Ende dargestellt. Im Ausführungsbeispiel nach der Figur 1 stehen die beiden Drehachsen der Trennrotoren 3, 4 quer zu den Achsen der Räderpaare 7, 8. Sie können jedoch auch bei einer anderen Bauart parallel und im Abstand zu den Achsen liegen.

Die Schwenkhebel 15, 16 beider Enden sind durch Positionierstangen 29, 30 verbunden, die den Häckselmessern 10, 11 zugeordnet sind und parallel und im Abstand zu den Tragachsen 12, 13 verlaufen. Die Häckselmesser 10, 11 haben an den Drehachsen der Trennrotore 3, 4 sowie den Tragachsen 12, 13 abgewandten Seiten Anschläge 32, 33 bildende Nasen, die an die Positionierstangen 29, 30 anliegen. Die Tragachsen 12, 13 liegen in winkelförmigen Ausnehmungen 34, 35 der Häckselmesser 10, 11. An der den Trennrotoren 3, 4 abgewandten Seiten sind diese Ausnehmungen 34, 35 offen. In der normalen Stellung liegen die Tragachsen 12, 13 in den abgewinkelten Bereichen. Zum Auswechseln eines Häckselmessers 10, 11 muß dieses entgegen der Drehrichtung des Trennrotors 3 bzw. 4 bewegt werden, so daß es durch die Ausnehmung 34 bzw. 35 hindurch von der Tragachse 12 bzw. 13 abgenommen werden kann. Die normale Stellung wird durch die Positionierstange 29, 30 gesichert, da die den Tragachsen 12, 13 abgewandten Seiten der Häckselmesser in einem entsprechenden Bogen verlaufen.

### Bezugszeichenliste

- 1 -: Mähdrescher
- 2 -: Trenneinrichtung
- 3 -: Trennrotor
- 4 -: Trennrotor
- 5 -: Gehäuse
- 5a -: Haube
- 6 -: Gehäuse
- 6a -: Haube
- 7 -: Axialfluß-Häckseleinrichtung
- 8 -: Häckselmesserdurchtrittsschlitze
- 9 -: Häckselmesserdurchtrittsschlitze
- 10 -: Häckselmesser
- 11 -: Häckselmesser
- 12 -: Tragachse
- 13 -: Tragachse
- 14 -: Schlagzähne
- 15 -: Schwenkhebel
- 16 -: Schwenkhebel
- 17 -: Dach
- 18 -: Langloch
- 19 -: Langloch
- 20 -: Koppelstange
- 21 -: Gabelkopf
- 22 -: Kolbenstange
- 23 -: Kolbenzylindereinheit
- 24 -: Siebeinrichtung
- 25 -: Gebläse
- 26 -: Übergabetrommel
- 27 -: Dreschtrommel
- 28 -: Schrägförderer
- M -: Mulde

## Patentansprüche

1. Mähdrescher mit einem Mähtisch und einem das Mähgut abtransportierenden Schrägförderer, dem ein Tangential- oder Axialdreschwerk nachgeschaltet ist, dem sich in Gutflußrichtung zwei nach dem Axialflußverfahren arbeitende, jeweils von einem Gehäuse (5) umschlossene Trenneinrichtungen (2) anschließen, wobei jede Trenneinrichtung im hinteren, dem Dreschwerk abgewandten Bereich mit einer Axialfluß-Häckseleinrichtung (7) ausgerüstet ist, deren in eine Betriebs- und Außerbetriebsstellung schwenkbare Häckselmesser (10) im Abstand zueinander auf zu den Drehachsen der Trennrotoren (3, 4) der Trenneinrichtungen (2) achsparallele Tragachsen (12, 13) drehfest aufgesetzt sind,
**dadurch gekennzeichnet,**
**daß** auf zwei achsparallelen Tragachsen (12, 13) jeweils mindestens ein Schwenkhebel (15, 16) drehfest aufgesetzt ist, deren den Tragachsen (12, 13) abgewandte Enden mittels eines Anschlußteiles (21) beweglich miteinander verbunden sind, welches auf das freie Ende der Kolbenstange (22) einer steuerbaren Kolbenzylindereinheit (23) aufgesetzt ist.

2. Mähdrescher nach Anspruch 1,
**dadurch gekennzeichnet,**
**daß** auf beide Enden der Tragachsen (12, 13) jeweils ein Schwenkhebel (15, 16) drehfest aufgesetzt ist, deren Enden mittels einer abstandsgleich zu den Tragachsen (12, 13) stehenden Koppelstange (20) verbunden sind, auf die im mittleren Bereich das Anschlußteil (21) der Kolbenstange (22) aufgesetzt ist.

3. Mähdrescher nach Anspruch 1 oder 2,
**dadurch gekennzeichnet,**
**daß** das Anschlußteil ein Gabelkopf (21) ist.

4. Mähdrescher nach Anspruch 1 oder 2,
**dadurch gekennzeichnet,**
**daß** die Enden der Schwenkhebel (15, 16) in Längsrichtung verlaufende Langlöcher (18, 19) aufweisen, in denen ein in den Gabelkopf (21) eingesetzter Bolzen oder die Koppelstange (21) gelagert ist.

5. Mähdrescher nach einem oder mehreren der vorhergehenden Ansprüche 1 bis 4,
**dadurch gekennzeichnet,**
**daß** die Kolbenzylindereinheit (23) ein doppelt wirkender Hydraulikzylinder ist, der von einem in der Kabine des Mähdreschers installierten Bedienungspult steuerbar ist.

## Claims

1. A combine harvester comprising a cutter table and an inclined conveyor which carries the cut material away and downstream of which is connected a tangential or axial threshing mechanism which is followed in the direction of flow of the material by two separating devices (2) which operate on the basis of the axial flow process and which are each enclosed by a respective housing (5), wherein each separating device is provided in the rear region remote from the threshing mechanism with an axial flow chopping device (7) whose chopping blades (10) which are pivotable into an operative and an inoperative position are fitted non-rotatably at a spacing relative to each other on to support shafts (12, 13) whose axes are parallel to the axes of rotation of the separating rotors (3, 4) of the separating devices (2), **characterised in that** non-rotatably fitted on to two support shafts (12, 13) which are arranged with their axes in parallel relationship is at least one respective pivotal lever (15, 16) whose ends which are remote from the support shafts (12, 13) are movably connected together by means of a connecting member (21) which is fitted on to the free end of the piston rod (22) of a controllable piston-cylinder unit (23).

2. A combine harvester according to claim 1 **characterised in that** non-rotatably fitted on to both ends of the support shafts (12, 13) is a respective pivotal lever (15, 16) whose ends are connected by means of a coupling bar (20) which is at an equal spacing relative to the support shafts (12, 13) and on to which in the middle region the connecting member (21) of the piston rod (22) is fitted.

3. A combine harvester according to claim 1 or claim 2 **characterised in that** the connecting member is a fork head (21).

4. A combine harvester according to claim 1 or claim 2 **characterised in that** the ends of the pivotal levers (15, 16) have slots (18, 19) which extend in the longitudinal direction and in which is mounted a pin fitted into the fork head (21) or the coupling bar (21).

5. A combine harvester according to one or more of preceding claims 1 to 4 **characterised in that** the piston-cylinder unit (23) has a double-acting hydraulic cylinder controllable from an operating panel installed in the cab of the combine harvester.

## Revendications

1. Moissonneuse-batteuse comportant une coupe et un convoyeur incliné qui évacue le produit récolté, à la suite duquel est disposé un mécanisme de battage tangentiel ou axial et, derrière celui-ci, dans la direction d'écoulement du produit récolté, deux séparateurs (2) entourés d'un carter, qui travaillent selon le principe de l'écoulement axial, chaque séparateur étant équipé dans sa partie arrière éloignée du mécanisme de battage d'un dispositif hachepaille (7) à écoulement axial dont les couteaux (10) qui peuvent pivoter dans une position de travail et une position de repos sont montés fixes en rotation, espacés entre eux, sur axes supports (12, 13) parallèles aux axes de rotation des rotors séparateurs (3, 4) des séparateurs (2), **caractérisée en ce qu'**au moins un levier pivotant (15, 16) est monté fixe en rotation sur chacun de deux axes-supports (12, 13) mutuellement parallèles, leviers dont les extrémités éloignées des axes-supports (12, 13) sont reliées entre elles de manière à pouvoir se déplacer, par l'intermédiaire d'une pièce de liaison (21) montée sur l'extrémité libre de la tige de piston (22) d'un ensemble piston-cylindre (23) commandé.

2. Moissonneuse-batteuse selon la revendication 1, **caractérisée en ce qu'**un levier pivotant (15, 16) est monté fixe en rotation aux deux extrémités des axes-supports (12, 13), levier dont les extrémités sont reliées à l'aide d'une tige de couplage (20) qui est située à égale distance des axes-supports (12, 13) et porte dans sa partie médiane la pièce de liaison (21) de la tige de piston (22).

3. Moissonneuse-batteuse selon la revendication 1 ou 2, **caractérisée en ce que** la pièce de liaison est une chape (21).

4. Moissonneuse-batteuse selon la revendication 1 ou 2, **caractérisée en ce que** les extrémités des leviers pivotants (15, 16) portent des trous oblongs (18, 19) orientés dans la direction longitudinale dans lesquels est monté un axe inséré dans la chape (21) ou dans la tige de couplage (21).

5. Moissonneuse-batteuse selon une ou plusieurs des revendications précédentes 1 à 4, **caractérisée en ce que** l'ensemble piston-cylindre (23) est un vérin hydraulique à double-effet qui peut être commandé à partir d'un pupitre de commande installé dans la cabine de la moissonneuse-batteuse.
